# FASCICULE DE BREVET EUROPEEN

(11) **EP 2 017 064 B1**
(45) Date de publication et mention de la délivrance du brevet: **04.05.2011**
(21) Numéro de dépôt: 08160750.9
(22) Date de dépôt: 18.07.2008
(51) Int. Cl.: B29C 63/18, F16F 1/02

(54) **Procédé de traitement anticorrosion d'un ressort à fil**
Verfahren zur Rostschutzbehandlung einer Drahtfeder
Method for anticorrosion treatment of a wire spring

(30) Priorité: 20.07.2007 FR 0756633
(43) Date de publication de la demande: 21.01.2009
(73) Titulaire: ALLEVARD REJNA AUTOSUSPENSIONS, 92210 Saint-Cloud (FR)
(72) Inventeur: Duquesne, Thierry, 59450 Sin-le-Noble (FR)
(74) Mandataire: Barbin le Bourhis, Joël

(56) Documents cités:
- JP-A- 57 024 215
- US-A- 5 310 167

## Description

L'invention se rapporte à un procédé de traitement anticorrosion d'un ressort à fil, par exemple un ressort constitué d'un fil enroulé en hélice. Un domaine d'application de l'invention est la protection des ressorts de suspension d'automobile.

Dans l'état actuel de la technique, il est connu de protéger les ressorts de suspension d'automobile contre la corrosion par application de peinture. Cependant, pendant la durée de vie du véhicule, des projections de gravillon entraînent une destruction du revêtement de peinture en sorte que le ressort est soumis progressivement à la corrosion. Par ailleurs, les spires d'extrémité en contact avec les coupelles d'appui du ressort voient leur protection anticorrosion se détruire encore plus rapidement par les frottements.

En conséquence, pour éviter des ruptures prématurées des ressorts de suspension, on est souvent amené à les surdimensionner.

L'invention propose une protection anticorrosion plus efficace permettant d'utiliser un fil de ressort de section plus faible, toute chose égale par ailleurs, entraînant une réduction de masse appréciable.

JP 57 02 4215 décrit un processus de recouvrement de fil rectiligne par retournement pneumatique, nécessitant de fixer la gaine à l'extrémité du fil.

L'invention concerne un procédé de traitement anticorrosion d'un ressort à fil, consistant à recouvrir ledit fil d'une gaine tubulaire en matériau plastique en la dilatant pneumatiquement, caractérisé en ce que ledit fil étant conformé en spirale, il consiste à engager ladite gaine sur un tube d'éjection d'air comprimé jusqu'à ce qu'une extrémité fermée de la gaine soit au voisinage d'un orifice dudit tube d'éjection, à approcher l'ensemble d'une extrémité dudit fil et à éjecter de l'air comprimé par ledit tube pour retourner ladite gaine en la faisant progresser le long dudit fil.

L'épaisseur de la gaine est inférieure ou, au plus, égale à 1 mm, environ. La gaine est constituée à partir d'un tube ayant un diamètre intérieur légèrement plus petit que le diamètre du fil du ressort.

Il résulte de ce type de mise en oeuvre du procédé que lorsque la gaine est engagée sur le fil, celui-ci se trouve recouvert par deux épaisseurs de gaine tubulaire en matériau plastique.

A l'issue du procédé, lorsque le fil est recouvert par une double épaisseur de gaine, la partie d'extrémité de cette gaine qui assure la mise sous pression, peut être coupée.

L'invention sera mieux comprise et d'autres avantages que ceux-ci apparaîtront mieux à la lumière de la description qui va suivre illustrant schématiquement la mise en oeuvre du procédé de traitement anticorrosion conforme à son principe, donnée uniquement à titre d'exemple et faite en référence aux dessins annexés dans lesquels :
- les figures 1 à 4 illustrent des phases successives de la mise en place de la gaine en matériau plastique sur le fil du ressort, et
- la figure 5 est une vue en perspective d'un ressort ainsi traité.

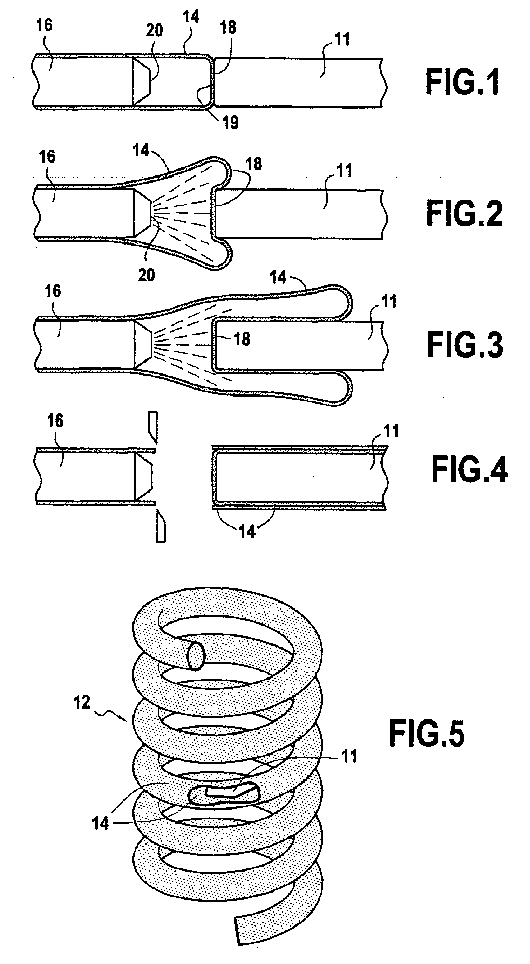

Pour la mise en oeuvre du procédé défini ci-dessus, visant à recouvrir le fil 11 d'un ressort hélicoïdal 12 constitué par plusieurs spires de ce fil, on utilise une gaine tubulaire 14 en matériau plastique susceptible d'être dilatée. On engage cette gaine sur un tube d'éjection d'air comprimé 16 jusqu'à ce qu'une extrémité fermée 18 de la gaine soit au voisinage de l'orifice 20 de ce tube d'éjection. C'est la situation illustrée sur la figure 1. Bien entendu, il est indifférent que la gaine soit fermée puis engagée sur le tube ou qu'elle soit engagée d'abord sur le tube avant d'être fermée. Comme le montre la figure 1, on positionne alors l'extrémité du tube d'éjection 16 et par conséquent l'extrémité fermée 18 de la gaine au voisinage d'une extrémité 19 du fil du ressort et sensiblement dans le prolongement de celui-ci.

On éjecte alors de l'air comprimé par le tube 16, ce qui provoque une dilatation de la gaine 14 et son retournement progressif. Cette phase est illustrée par les figures 2 et 3 et on voit que la gaine progresse ainsi le long du fil jusqu'à ce que celui-ci soit recouvert d'une double épaisseur de gaine 14 en matériau plastique. Après coupure de l'alimentation en air comprimé, la gaine, naturellement élastique, reprend ses dimensions initiales et vient enserrer le fil. Lorsque la gaine est en place sur le fil, il suffit de la couper entre l'orifice 20 du tube d'éjection d'air et l'extrémité voisine du fil. C'est la situation illustrée à la figure 4.

Comme mentionné précédemment, le ressort ainsi obtenu peut être constitué d'un fil de diamètre plus faible que celui d'un ressort équivalent de type connu, recouvert d'une peinture protectrice.

## Revendications

1. Procédé de traitement anticorrosion d'un ressort à fil (11), consistant à recouvrir ledit fil d'une gaine tubulaire (14) en matériau plastique en la dilatant pneumatiquement, **caractérisé en ce que** ledit fil étant conformé en spirale, il consiste à engager ladite gaine (14) sur un tube d'éjection d'air comprimé (16) jusqu'à ce qu'une extrémité fermée de la gaine soit au voisinage d'un orifice dudit tube d'éjection, à approcher l'ensemble d'une extrémité dudit fil et à éjecter de l'air comprimé par ledit tube pour retourner ladite gaine en la faisant progresser le long dudit fil.

2. Procédé selon la revendication 1, **caractérisé en ce que** ledit fil est recouvert de deux épaisseurs d'une gaine tubulaire (14) en matériau plastique précitée, résultant du retournement de la gaine.

## Claims

1. An anticorrosion treatment method for a wire spring (11), the method consisting in covering said wire in a tubular sheath (14) of plastics material and in expanding it pneumatically, the method being **characterized in that**, with said wire being spirally shaped, the method consists in engaging said sheath (14) on a compressed air ejection tube (16) until a closed end of the sheath is in the vicinity of an orifice of said ejection tube, in approaching the assembly to one end of said wire, and in ejecting compressed air via said tube in order to turn said sheath inside out by causing it to progress along said wire.

2. A method according to claim 1, **characterized in that** said wire is covered in two thicknesses of an above-mentioned tubular sheath (14) of plastics material as a result of the sheath turning inside out.

## Patentansprüche

1. Verfahren zur Korrosionsschutzbehandlung einer Drahtfeder (11), das darin besteht, den Draht mit einer röhrenförmigen Kunststoffummantelung (14) durch pneumatisches Ausdehnen dieser zu überziehen, **dadurch gekennzeichnet, daß** - da der Draht spiralförmig ausgebildet ist - es darin besteht, die Ummantelung (14) soweit über ein Druckluftausstoßrohr (16) zu stecken, bis ein geschlossenes Ende der Ummantelung sich in der Nähe einer Öffnung des Ausstoßrohrs befindet, die Anordnung einem Ende des Drahtes zu nähern und Druckluft über das Rohr auszustoßen, um die Ummantelung dadurch zu wenden, daß man sie entlang dem Draht vorwärtsschreiten läßt.

2. Verfahren nach Anspruch 1, **dadurch gekennzeichnet, daß** der Draht mit zwei Dicken einer vorgenannten röhrenförmigen Kunststoffummantelung (14), die aus dem Wenden der Ummantelung hervorgehen, überzogen wird.
